# EUROPEAN PATENT APPLICATION

(11) **EP 3 386 194 A1**
(43) Date of publication of application: **10.10.2018**
(21) Application number: 18161543.6
(22) Date of filing: 13.03.2018
(51) Int. Cl.: H04N 7/173, H04N 7/18, H04N 21/234, H04N 21/2343, H04N 21/236, H04N 21/24, H04N 21/242, H04N 21/2662, H04N 21/41, H04N 21/43, H04N 21/472, H04N 21/845, H04N 21/854

(54) **METHOD OF DELIVERY AUDIOVISUAL CONTENT AND CORRESPONDING DEVICE**

(30) Priority: 04.04.2017 EP 17305402
(71) Applicant: THOMSON LICENSING, 92130 Issy les Moulineaux (FR)
(72) Inventor: LE GARJAN, Bruno, 35576 Cesson-Sévigné Cedex (FR); PALANICHAMY, Arunkumar, 560100 BENGALORE (IN); BORDES, Philippe, 35576 Cesson-Sévigné Cedex (FR); QUERE, Thierry, 35576 Cesson-Sévigné Cedex (FR); OZEROV, Alexey, 35576 Cesson-Sévigné Cedex (FR)
(74) Representative: Vidon Brevets & Stratégie

(57) **Abstract**

A solution for delivery of audiovisual content to a receiver device is provided. At the transmitter side, a transmission buffer is constituted, while offering fast channel change and fast trick modes at the receiver side. At least one GoP, starting with a first I-frame is sought in the content that is to be transmitted. The timing references of the data in the at least one GoP that is prepared for delivery to a receiver device are modified so that the data is decoded by the receiver at a slowed-down rate for a given duration. This creates a lag between reading of data in by the transmitter and decoding of data by the receiver. The lag is used by the transmitter to fill the transmission buffer, while the receiver does not have to wait for the transmission buffer to be filled to start decoding.

## Description

### FIELD

The present disclosure generally relates to the field of streaming of audiovisual content to receiver devices, and in particular to receiver devices connected in a local network.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Audiovisual content is distributed by a server device to receiver devices ('receivers') in a network. When a receiver requests audiovisual data from a distribution server, a certain amount of data buffering is required on the server side, e.g., queued in a First In - First Out (FIFO) output queue, so that the distribution server has enough data in its transmission buffer to ensure smooth stream delivery to a receiver requesting a stream including the audiovisual data. This buffering requirement conflicts however with a fast channel change requirement. It results in important delivery delay when a receiver requests a new stream, e.g., in the case of channel change, or Video on Demand (VoD) trick mode. Several solutions have been proposed to tackle this problem. For example US 2016/0150273 A1 to Yamagishi is related to implementing rapid zapping between channels in Moving Picture Experts Group - Dynamic Adaptive Streaming over HTTP (MPEG-DASH). Yamagishi proposes a server to separate a zapping segment stream from a viewing segment stream. The segments of the zapping stream are of shorter length than the segments of the viewing segment stream. When a receiver zaps to a new channel, it first connects to the zapping segment stream and then switches to the viewing segment stream. However, providing segments with short size puts an important encoding strain on the server and encoding efficiency is not optimal. Further, short segment lengths may result in poor streaming performance due to overhead produced by frequent requests and influence of network delay. Further, it is not always possible to provide segments of very short size. For example, HTTP Live Streaming (HLS) recommends a segment of size 9-10s.

There is thus a need for a solution that does not require segments of short length, which enables data buffering on the server side, while offering fast channel change and short access delay when trick modes are used.

### SUMMARY

According to one aspect of the present disclosure, a method for delivery of audiovisual content to a receiver device, implemented by a transmitter device, is provided. The method comprises receiving a request for obtaining audiovisual data from a source for delivery to the receiver device; obtaining the audiovisual data from the source; modifying decoding and presentation time references in the audiovisual data before delivery of the audiovisual data to the receiver device for slowed-down decoding of the audiovisual data by the receiver device, the slowed down decoding by the receiver device adding a delay between the obtaining of the audiovisual data from the source and delivery of the obtained audiovisual data to the receiver device; using the added delay between said obtaining of said audiovisual data from said source and delivery of said obtained audiovisual data to said receiver device for filling a transmission buffer in the transmitter device with the obtained audiovisual data; and delivery of the audiovisual data to the receiver device.

According to an embodiment of the method for delivery of audiovisual content to a receiver device, the decoding and presentation time references are modified by applying an offset to the decoding and presentation time references, the offset slowing down decoding and presentation of the audiovisual data by the receiver device.

According to an embodiment of the method for delivery of audiovisual content to a receiver device, the method further comprises stopping with adding the delay when the transmission buffer is full.

According to an embodiment of the method for delivery of audiovisual content to a receiver device, the method further comprises adding a further delay between the obtaining of the audiovisual data and delivery of the obtained audiovisual data to the receiver device by repeating independently decodable frames in the audiovisual data.

According to an embodiment of the method for delivery of audiovisual content to a receiver device, the audiovisual data source is one of:
a Digital Terrestrial Television frequency carrier;
a satellite frequency carrier;
a Cable frequency carrier;
an audiovisual data storage device.

According to an embodiment of the method for delivery of audiovisual content to a receiver device,the transmitter device is one of a gateway or a set top box.

According to one aspect of the present disclosure, a device for delivery of audiovisual content to at least one receiver device, is provided. The device comprising a processor, a network interface and a memory, the processor being configured to: receive a request for obtaining audiovisual data from a source for delivery to the receiver device; obtain the audiovisual data from the source; modify decoding and presentation time references in said audiovisual data before delivery of said audiovisual data to said receiver device for slowed-down decoding of said audiovisual data by said receiver device, said slowed down decoding by said receiver deviceadding a delay between the obtaining of the audiovisual data from the source and delivery of the obtained audiovisual data to the receiver device; use the added delay between said obtaining of said audiovisual data from said source and delivery of said obtained audiovisual data to said receiver device for filling a transmission buffer in the transmitter device with the obtained audiovisual data; and deliver the audiovisual data to the receiver device.

According to an embodiment of the device, the processor, the network interface and the memory are further configured to modify the decoding and the presentation time references by applying an offset to the decoding and presentation time references, the offset slowing down decoding and presentation of the audiovisual data by the receiver device.

According to an embodiment of the device, the processor, the network interface and the memory are further configured to stop with adding the delay when the transmission buffer is full.

According to an embodiment of the device, the processor, the network interface and the memory are further configured to add a further delay between the obtaining of the audiovisual data and delivery of the obtained audiovisual data to the receiver device by repeating independently decodable frames in the audiovisual data.

According to an embodiment of the device, the audiovisual data source is one of:
a Digital Terrestrial Television frequency carrier;
a satellite frequency carrier;
a Cable frequency carrier;
an audiovisual data storage device.

According to an embodiment of the device, the transmitter device is one of a gateway or a set top box.

### BRIEF DESCRIPTION OF THE DRAWINGS

More advantages of the present disclosure will appear through the description of particular, non-restricting embodiments. In order to describe the manner in which the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The exemplary embodiments will be described with reference to the following drawings in which:
**Figure 1** is an example environment suitable for implementing aspects of the present principles.
**Figure 2** is an embodiment of a method of streaming audiovisual content according to the present principles.
**Figure 3** is a further embodiment of the method according to the present principles.
**Figure 4** is a further embodiment of the method of streaming audiovisual content according to the present principles in an adaptive streaming environment.
**Figure 5** is a further embodiment of the present principles that combines the embodiments of figures 3 and 4.
**Figure 6** is an embodiment of the present principles illustrating the effect of adding positive offset to the timing references.
**Figure 7** is an embodiment of the present principles illustrating the effect of adding positive offset to the timing references.
**Figure 8** is a flow chart of a preferred embodiment of the method of streaming audiovisual content according to the present principles.
**Figure 9** is an embodiment of a device for implementing the method of streaming audiovisual content according to the present principles.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Proposed is a solution that enables important data buffering on the server side while not penalizing fast channel change. While enabling the required buffering, channel change speed is improved through delivery, upon connection of a receiver to a new channel, of the audiovisual data to the receiver with modified timing. Then, the audiovisual data can be delivered with short delay, ensuring fast channel change, while the modified timing causes the receiver device to play the audiovisual data at a slower than 'normal' rate. The playing at slower-than-normal rate enables the server to constitute a transmission buffer as data is retrieved from the server at a lower than normal rate (i.e., the data is consumed at a slowed down rate by the receiver). When the server has constituted a transmitter buffer of sufficient size, the audiovisual data is proposed to the receiver without modification of the rate, so that the audiovisual data is consumed by the receiver at its normal rate and the transmission buffer stops growing.

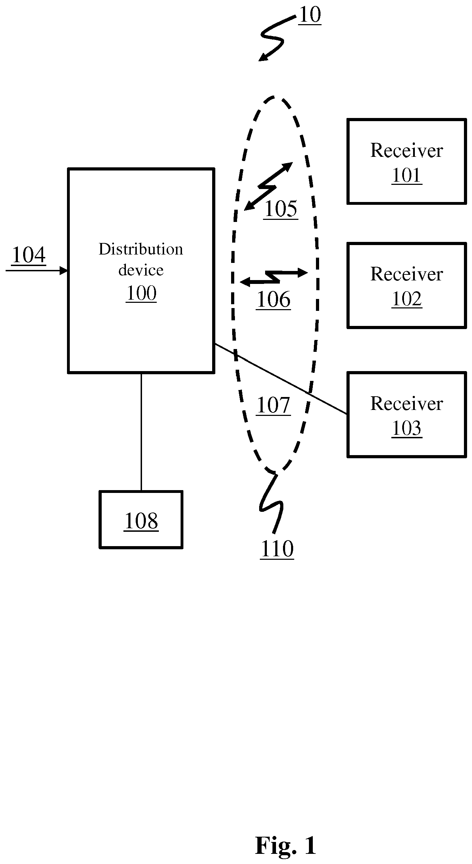

**Figure 1** is an example environment suitable for implementing aspects of the present principles. A system **10** includes a distribution device **100** including a storage device **108**, a receiver device **101**, a receiver device **102** and a receiver device **103.** Receiver devices **101-103** ('receivers') are connected in a network **110**, for example a local network. Communication between device **100** and receivers **101-102** is over a wireless communication medium, for example according to WiFi. Communication between device **100** and receiver **103** is over a wired communication medium, for example according to Ethernet. Distribution device **100** receives input from an external network, for example a cable network, a satellite distribution network, a terrestrial distribution network, or an Internet Protocol (IP) network. Distribution device **100** can store input, e.g., from any of receivers **101-103** or received from any of the above discussed sources in local storage device **108.** Storage device **108** is for example used as a Personal Video Recorder (PVR). Device **100** includes for example a satellite, cable or terrestrial receiver or tuner module for reception of content transmitted according to a Digital Video Broadcasting (DVB) or Advanced Television Systems Committee (ATSC) standard. The PVR feature enables stored content to be delivered to any of the receivers **101-103.** Device **100** is for example a Home Gateway or a Set Top Box (STB), with or without display means. Receivers **101-102** are for example mobile devices such as tablets or smart phones. Receiver **103** is for example an STB or a Personal Computer (PC). Device **100** delivers service- or channel lists to receivers **101-103.** Receivers **101-103** can select services/channels/recorded content from these lists and transmit their selection to device **100.**

When device **100** receives a service/channel selection from any of the receivers **101-103**, operations are required such as: tuning to a specific carrier frequency which comprises elementary streams of the selected service or channel, filtering of specific elementary streams belonging to the selected service/channel from an Multi Program Transport Stream (MPTS) multiplex transmitted on the tuned-to-frequency and re-multiplexing of selected elementary streams into an Single Program Transport Stream (SPTS), storing the re-multiplexed data in a transmission buffer, and transmission of data from the transmission buffer to the receiver via IP unicast or otherwise. When device **100** receives a selection for readout of recorded content, a transmission buffer is constituted before the first packets of recorded data can be rendered available to the receiver. The receiver, in turn, will have to constitute a reception buffer and decode the data. The receiver will have to wait for receipt of an independently decodable frame, and I-frame, to start decoding. I-frames are typically transmitted in MPEG streams every second. From receipt of the first packets of the selected service/channel, it can take up to two seconds for the decoder to be able to start decoding. The addition of time required for all of these operations compose the channel change delay.

Adaptive streaming technologies such as HLS or MPEG-DASH have become widespread nowadays because of their many advantages. If a receiver for which content belonging to a selected service/channel/recorded content is to be prepared requires transmission of the selected service/channel/content according to an adaptive streaming protocol, further decoding and encoding steps are required on the side of device **100.** One of the main principles of adaptive streaming is that content is available to a receiver in several bit rates so that a receiver can choose between several bit rates according to bandwidth conditions. For example, if reception bandwidth is low due to user displacement, the receiver **101-103** selects a low bit rate version of the selected content. This enables continued viewing of the selected content at the price of degraded rendering quality. If reception bandwidth is sufficiently high, the receiver **101-103** selects a high bit rate version of the selected content for an optimal viewing experience. In order to adapt to rapidly varying bandwidth conditions, the content is chopped in segments of a duration of typically 10 seconds. This means that every 10 seconds, the receiver **101-103** may select a same content in a different bandwidth version. On the device **100** side, this requires decoding and encoding operations. Content selected by the receiver **101-103** must first be decoded by device **100**, and then be re-encoded by device **100** in the different bit rate versions. To enable the receiver **101-103** to smoothly switch between different bit rate versions of a same content, device **100** must re-encode each segment such that it starts with an independently decodable frame, the aforementioned I-frame. Each segment will thus start with an I-frame and each segment will comprise one or more complete Group of Pictures (GoPs) that can be independently decoded by the receiver **101-103.** When device **100** thus receives a selection request for a new service/channel, e.g. during a channel change, the device **100** will have to acquire data from the selected service/channel, wait for a first I frame, decode one or several GoPs starting from the first received I-frame, and re-encode the decoded information into one or more GoPs with different bit rates. If the segment duration is set to 10s, the device **100** may then additionally have to acquire 10s of content of the selected service/channel after the first I-frame, and then decode the acquired content and re-encode it into different bit rate versions, before rendering the segments available to the receiver **101-103.** When device **100** receives a selection request for content stored on storage **108**, an I-frame is sought for that is the closest to a requested play out point in the requested content, one or several GoPs starting from that I-frame are decoded and re-encoded into one or more GoPs with different bit rates. If the segment duration is set to 10s, the device **100** will have to acquire 10s of content of the selected recorded content after the closest I-frame, decode and re-encode the acquired content into different bit rate versions, before rendering the segments available to the receiver **101-103.**

It will therefore take more than 10s for the receiver **101-103** to receive a first segment of the requested content. As aforementioned, the receiver **101-103** will require some additional reception buffering before transmitting the received content to its decoder. In practice, it will thus take largely more than 10s for the receiver **101-103** to render a first image after a channel change or selection of stored content.

These time-consuming operations thus adversely affect user experience in case of channel surfing or selection of recorded content (e.g., via use of so-called trick modes such as play/pause/resume/fast forward/fast reverse). It is commonly admitted that channel change delays / content selections that exceed 2-3s are perceived as too slow by consumers.

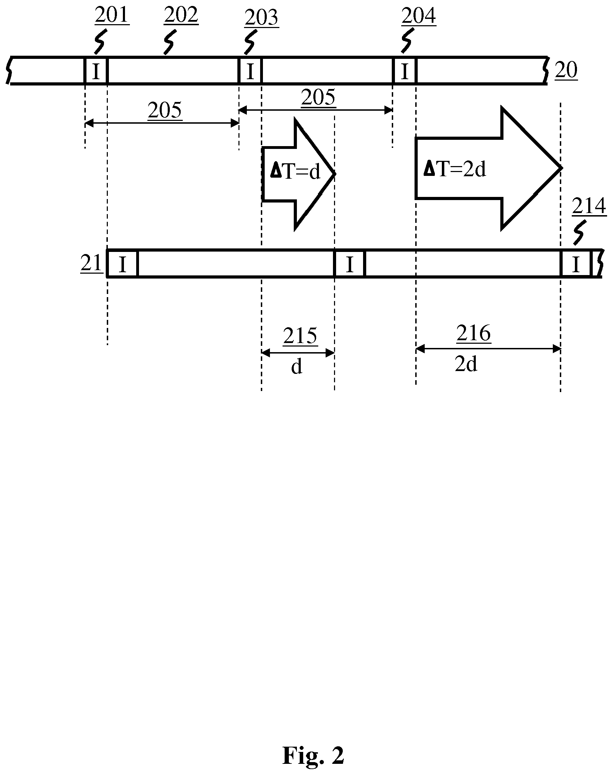

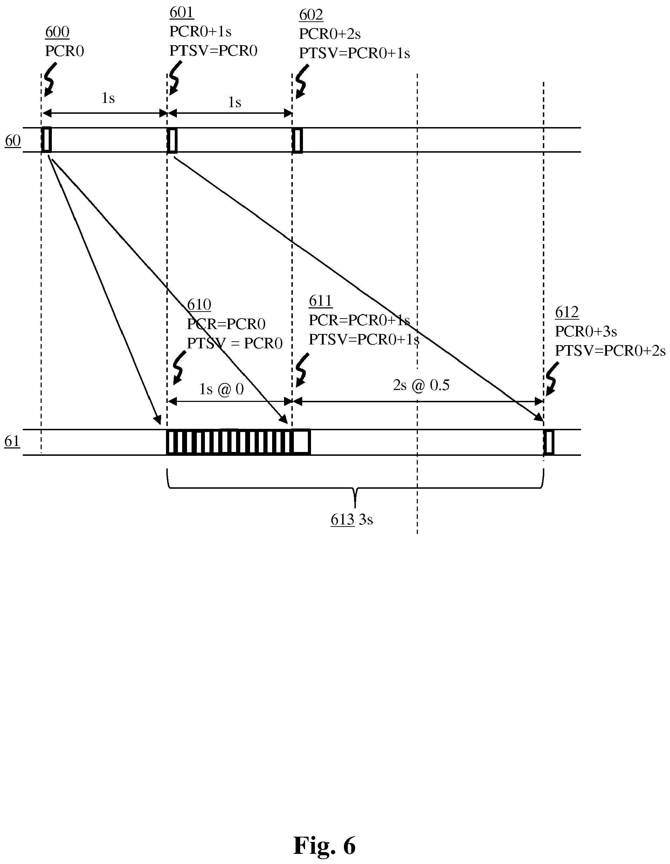

**Figure 2** is an embodiment of a method of streaming audiovisual content according to the present principles. An audiovisual data stream **20** is received by device **100**, comprising an I-frame **201**, **203, 204** every x seconds; e.g., as extracted by device **100** from an MPTS transmitted on a digital terrestrial television frequency carrier, a satellite frequency carrier, a cable television frequency carrier. A delay between subsequent I-frames is indicated by reference **205.** Each I-frame is followed by further P- and B-frames **202** that finally refer to the I-frame. The I-frame and the further P- and B-frames together forming a GoP. When device **100** has determined a first I-frame **201** in the audiovisual data stream **20**, it transmits the I-frame to a receiver **101-103** having requested the stream. The device **100** will also modify timing references in the audiovisual data stream transmitted to the receiver device **101-103.** Due to modified timing references in the data provided to the receiver **101-103**, the receiver **101-103** will decode the stream with a slightly slowed down rate, that is, slightly slower than its intended decoding rate as specified by the original timing references in the stream received by device **100**, for example, at a rate or slow-down factor of 0.5-0.95 times the original rate. The decoding of the stream is illustrated by reference **21.** Reference **21** represents the stream **20** as provided to the receiver's **101-103** decoder. The modified timing references slow down the decoding process in the receiver **101-103.** After receipt by device **100 of** the second I-frame **203**, the decoding by the receiver **101-103** is thus lagging behind the reception of the data by device **100** with a difference that is at least ΔT = d as indicated by reference **215.** As long as the timing references in the stream received by the receiver **101-103** are modified by device **100**, the receiver **101-103** will decode and play the stream at a lower than original rate and the lag between the data received by device **100** and the data received by receiver **101-103** will continue to increase; e.g., at least ΔT = 2d, as indicated by reference **216,** between receipt of the third I-frame **204** and the decoding of the third I-frame **214** by receiver **101-103.** The lag is used at the device **100** side to constitute a transmission buffer. When the device **100** has constituted a transmission buffer of sufficient size (e.g., 2-10 seconds), device **100** will continue modifying the timing references in the stream by merely adding the offset already accumulated. According to a different embodiment discussed with reference to figure 6, the timing references are no longer modified. From that moment, the stream will be decoded by receiver **101-103** at its original rate. The effect of this is that receiver **101-103**, when requesting transmission of a new stream from device **100**, will quickly receive an independently decodable I-frame and decoding can start early. A second effect is that device **100** now can constitute a transmission buffer. A side effect is that, for example during channel change, while channel change is operated quickly, data of the new channel is first decoded slowly by receiver **101-103** during the duration required for device **100** to constitute the transmission buffer, before being decoded at normal rate. For a viewer, this 'slow start' effect is observable if the slowed down rate is significantly lower than the original rate. According to an embodiment, the timing references are modified such that the timing references in stream **21** are modified with a decreasing slowdown factor until reaching zero when the device **100** has constituted its transmission buffer. This way, there is no noticeable acceleration glitch in the receiver **101-103** when the device **100** reverts to offsetting the timing references with the offset accumulated during the time required for the constitution of the transmission buffer or when the device 100 reverts to no longer offsetting the timing references after the time required for the constitution of the transmission buffer, see fig.6. This is due to a gradual acceleration of the decoding rate by the decoder in receiver **101-103** during the time required for the constitution of the transmission buffer in device **100**, which is barely observable for a user of the receiver device **101-103.** The technical details of the modification of the timing references are given further when SPTS creation is discussed.

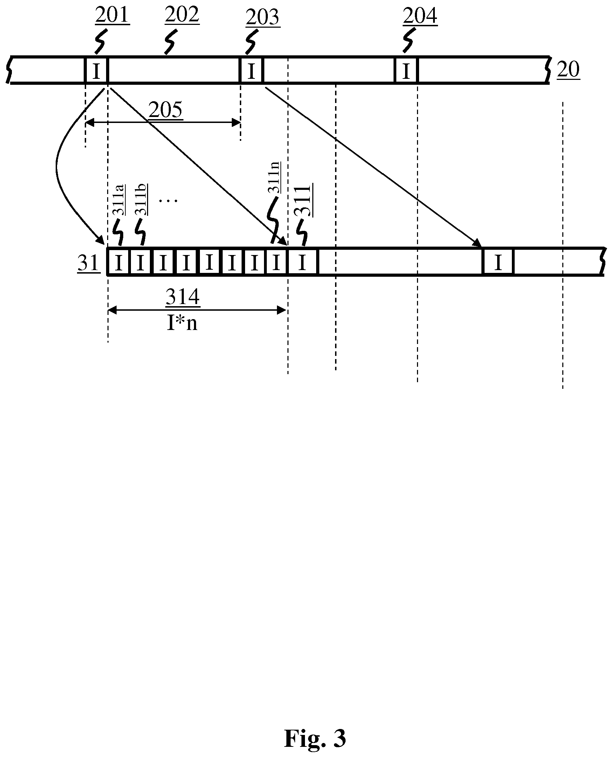

**Figure 3** is a further embodiment of the method according to the present principles that enables the device **100** to constitute a transmission buffer even more quickly when a receiver device **101-103** requests transmission of data of a new stream. Device **100**, after having received a first I-frame **201** in stream **20**, immediately transmits this first I-frame to receiver **101-103** as I-frame **311a** of stream **31**, and repeats the transmission of the I-frame with **311b** until **311n** it is repeated n times at I-frame **311n.** Finally, the first received I-frame **201** is transmitted in a GoP starting with I-frame **311** after a delay **314** d=l*n. Then, the stream **31** provided to receiver **101-103** is a copy of stream **20** but with modified timing references as previously mentioned such that the stream **31** is decoded by receiver **101-103** at a slower rate than the original rate. The immediate transmission of a repeated number of copies of the first I-frame received by device **100** enables the fast constitution of a first part of a transmission buffer in device **100**, at the price of the rendering of a fixed image on a display device associated with receiver **101-103** during transmission of the repeated copies. This has the effect of adding a further delay d=l*n between the receipt of the stream by the device **100** and its decoding by device **101-103.** Then, the transmission buffer size is increased by applying the method as discussed with reference to figure 2 which has an effect of further increasing the transmission buffer size until the transmission buffer is of sufficient size. The discussed different embodiment enabling a progressive acceleration of the slowed down rate to the original rate can also be applied here to avoid any glitch effect for improvement of user experience.

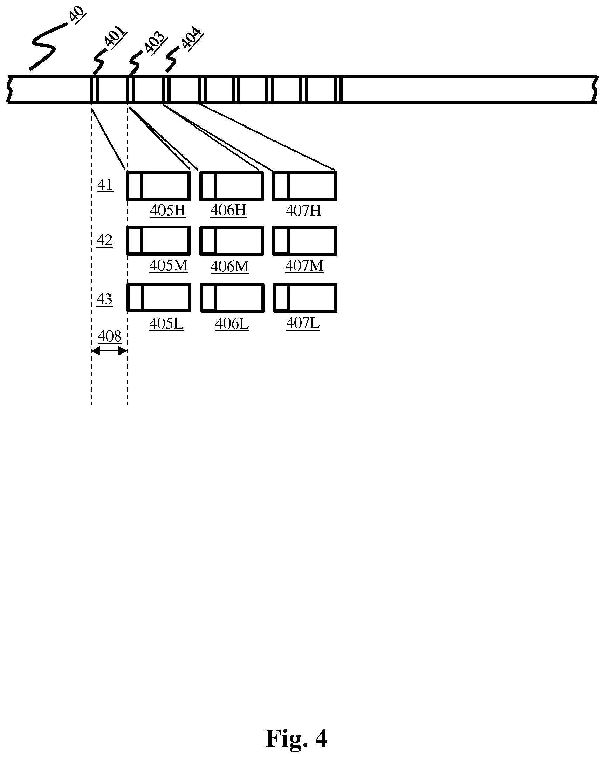

**Figure 4** illustrates a further embodiment of the method of streaming audiovisual content according to the present principles in an adaptive streaming environment. A greater part of stream **20** already depicted in figure 2 and 3 is shown with reference **40.** When a first I-frame **401** is detected by device **100** in stream **40**, the entire GoP starting with that I-frame is decoded by device **100.** Then, after a delay **408**, the decoded GoP is encoded by device **100** in three different bit rate segments represented by **41**, **42** and **43**, and stored as segments **405H**, **405M** and **405L**, for High, Medium and Low bandwidth. A second set of segments **406H**, **406M**, **406L** is created based on detection of the second I-frame **403** and decoding of the second I-frame **403** and associated B- and P-frames. A third set of segments **407H**, **407M**, **407L** is created based on detection of the third I-frame **404** and decoding of the third I-frame **404** and associated B- and P-frames; and so on. The segments **405 406** and **407** are illustrated as being stretched out compared to the decoded GoP from which they originate, to emphasize that their timing references are modified as part of the encoding process, so that they are, when retrieved by a receiver **101-103**, decoded by receiver **101-103** more slowly than the original GoP in stream **40.** The illustrated encoded segments include a single GoP. In practice, an encoder in device **100** may produce segments with multiple GoPs. Each of the high, medium and low bit rate encoded segments as illustrated include a same number of GoPs. In practice, an encoder in device **100** may produce segments for high, medium and low bit rate with a different number of GoPs. The choice of the number of GoPs depends on the segment size and optimization of encoding efficiency, but each segment will include and start with at least one GoP so that each segment can be decoded independently by a decoder in receiver **101-103.** According to figure 4, three different bit rate versions are created for High, Medium and Low bandwidth. Of course, any number of different bit rate versions can be created by device **100** though in practice, notably for encoding efficiency reasons, the number of different bit rate versions will range from 3 to 9. According to what is illustrated, the stream data that is encoded in a segment is data from a single GoP. In practice, data from more than one GoPs of the original stream is encoded in a single segment.

The effect of this treatment by device **100** is that a device **100** implementing the method can quickly, after having received a first request for retrieval of data from a channel from a receiver **101-103** that is substantially equal to duration **408,** start to encode first segments for receiver **101-103**, so that the receiver **101-103** can quickly start decoding and render the first data from the stream. As aforementioned, setting up of a reception of data from a selected channel may require operations for device **100** such as tuning, demultiplexing and re-multiplexing which may take additional time not accounted for herewith. Another effect of this treatment is that, since the timing references of the encoded segments are modified, the receiver **101-103** will decode and consequently render the data included in the segments at a slowed-down rate, which enables the device **100** to constitute a transmission buffer.

Not shown in figure 4, is that the device **100** will continue modifying the timing references in the segments when it has constituted a transmission of sufficient size (e.g., 2-10s) with the offset accumulated during the period required for constituting the transmission buffer. According to a different embodiment (see figure 6), the device **100** will stop modifying the timing references in the segments when it has constituted a transmission of sufficient size. Then, these segments will be decoded at their normal rate (i.e., the rate as intended for the stream from which the data originates).

According to a different embodiment already described previously, the timing references are modified such that the acceleration of the decoding rate by the receiver **101-103** is barely observable for a user of the receiver device **101-103.** Also not shown in figure 4, is that the device **100** can, when it has constituted a transmission buffer of sufficient size, create longer segments that contain more data from the original stream. For example, it may then create segments of the size of the transmission buffer, which may be greatly beneficial to the encoding efficiency. According to an embodiment, the device **100** creates, while constituting its transmission buffer, segments of increasing size until a target size is obtained when the desired transmission buffer size is reached, the target size being at maximum the size of the transmission buffer.

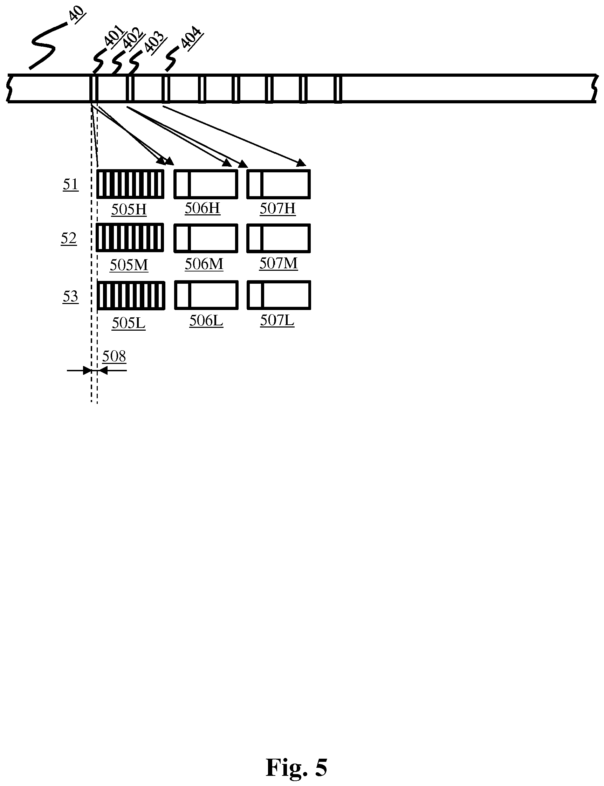

**Figure 5** illustrates a further embodiment of the present principles. According to this embodiment, after detection by the device **100** of a first I-frame **401** in stream **40**, the device **100** immediately decodes I-frame **401**, and based on the decoded I-frame **401** encodes and stores first segments **505H**, **505M** and **505L**, which include a number of repetitions of I-frame **401**, encoded in different bit rates and stored in segments. Then, segments **506H**, **506M** and **506L** are encoded and stored based on the first decoded GoP that starts with the first detected I-frame **401** and that ends with the second I-frame **403**, i.e., including B- and P- frames included in **402.** Then, device **100** decodes the GoP starting with the second I-frame **403** and ending with the third I-frame **404** and encodes and stores segments **507H**, **507M** and **507L** based on the second decoded GoP, and so on. The embodiment of figure 5 is a combination of the embodiments of figures 3 and 4. Advantageously, an adaptive streaming receiver such as any of receivers **101-103** can now retrieve a first segment **505H**, **505M** or **505L** of a new channel within a very short time after the request for a first segment that is substantially equal to **508**, at the price of rendering a fixed image during the duration of the segment. The method is straightforward for decoding of subsequent GoPs and encoding of subsequent segments according to different bit rate versions with modified timing references as previously discussed until the transmission buffer of sufficient size is constituted by device **100.** The previously discussed embodiment resulting in progressive accelerating decoding rate by the receiver **101-103** is also applicable here.

It can thus be observed that the present principles enable to constitute a transmission buffer while keeping low channel change delay, and that the present principles are applicable to both adaptive streaming solutions as well to non-adaptive streaming solutions, without requiring modifications on the receiver side.

Following are further details about the constitution of what is produced by device **100** and how. Figures 2-5 do not illustrate the creation of SPTS packets from the data included in **21** (figure 2), 31 (figure 3), **41**, **42** and **43** (figure 4) and **51**, **52, 53** (figure 5). Transport stream packetization of data produced according to what is discussed with reference to figs. 2-5 is part of the processes executed by device **100.** The transport stream encapsulates packetized elementary streams such as audio, video and subtitles as well as tables identifying the elementary streams. The packet is a basic unit of data in the transport stream.

Device **100** may include, at first request for data from an audiovisual channel from a receiver **101-103**, in the first SPTS data for transmission by the receiver **101-103**, program specific information (PSI) about the program in the stream by including information tables such as Program Association Table (PAT) and Program Map Table (PMT), so that the receiver **101-103** can acquire information about the data such as which program is comprised in the SPTS, what is the Program Identifier (PID) of the PMT; whereas the PMT indicates which packets comprise a timing reference such as Program Clock Reference (PCR) and information about PIDs of elementary video and audio streams in the data. If the device **100** prepares segments for adaptive streaming, the first segment may include the program specific information. In the first data for transmission to a receiver **101-103**, the device **100** may remove subtitle and audio stream information from the PMT so that the receiver **101-103** can quickly render a first image included in the first data without waiting for audio/video synchronization.

For embodiments that comprise a repetition of I-frames such as discussed with reference to figures 3 and 5, the PCR timing references are modified as follows so that the image repetition is displayed correctly when decoded by receiver **101-103.** For this, the PCR of each repeated I-frame is increased with the inverse of the frame rate of the selected video elementary stream. That is, if the frame rate is for example 25 frames per second (fps) the PCR for each repeated I-frame is increased with an equivalent of a number of clock ticks of a PCR done in 1/25s.

Note that I-frames can be detected in a transport stream by searching for transport stream packets having an adaptation_field with random_access_indicator set to 1. Note that the frame rate can be determined for example from the sequence header of an MPEG2 stream (field frame_rate_code), from VUI packets in H.265/HEVC stream or H.264/AVC type streams.

For slowed-down decoding of audiovisual data during the time required to constitute a transmission buffer, the PCRs in the data prepared by the device **100** for decoding by receiver **101-103** are multiplied with a slow-down factor, e.g., the previously mentioned 0.5-0.95, for example 0.8. According to the previously discussed embodiment that enables a progressive acceleration, the slow-down factor progressively changes from, for example, 0.5 to 1 during the time required to constitute a transmission buffer. If the slowed-down decoding is preceded by a repetition of I-frames as previously discussed, the value of the first PCRs following the PCR of the last I-frame of the repetition should of course be based on the modified PCR of that last I-frame. Additionally, Presentation Time Stamp (PTS) should be modified of the video elementary stream, of the audio elementary stream if not removed, and of the subtitle elementary stream if not removed for during the duration required to constitute the transmission buffer. Each following PTS value should then be set to a value of the previous PTS from which the accumulated difference between the PCR value of the original stream minus the slowed-down PCR value is deduced. Finally, the picture timing information of the video elementary stream should be modified to be coherent with the slow-down rate. For example, for MPEG2 video, the frame rate is changed by changing the fields frame_rate_code, frame_rate_extension_m, and frame_rate_extension_d. For HEVC video, divide the vui_num_ticks_poc_diff_one_minus1 by the slow-down factor. For H.264 video, the time_scale value should be modified.

As mentioned, during the period required for constituting the transmission buffer, decoding and rendering of audio stream by the receiver **101-103** may be inhibited by removing references to the audio elementary stream from the PMT. However if the references are not removed, the slowed-down rate of the decoding and rendering by the receiver should not be too important as the pitch change would be audible, which would induce a hearing discomfort for the user. If the slowed-down rate is not too important (e.g., 0.8) the pitch change can be acceptable. The sample rate in the header of the audio packets should then be modified to be coherent with the slowed-down rate. According to a different embodiment, which is notably suited for more important slowed-down rates, the audio speed change can be performed without pitch change but this requires decoding and re-encoding of the audio stream. According to a different embodiment, audio PTS is modified such that first audio is rendered when the decoding rate is no longer modified so that there are no pitch changes.

When the transmission buffer is constituted and decoding rate by receiver **101-103** returns to the encoding rate of the stream received by device **100** (i.e., slow-down rate = 1), the timing references need to be modified continuously so that they are coherent with the timing references of the data provided to the receiver **101-103** during the period the transmission was constituted. For this, an offset is to be added to each of the PCR of the stream destined to the receiver device **101-103** following this period, that is equal to the duration of the transmission buffer in terms of PCR ticks, or said otherwise, that is equal to the difference between the last modified PCR of the slow-down period and the value of the original corresponding PCR in the stream received by the device **100.** The same is true for the PTS time stamps. An offset is to be added to each of the PTS of the stream destined to the receiver device **101-103** following this period, that is equal to the duration of the transmission buffer in terms of PCR ticks, or said otherwise, that is equal to the difference between the last modified PTS of the slow-down period and the value of the original corresponding PTS in the stream received by the device **100.** Alternatively, see figure 6, the timing references need not to be modified after constitution of the transmission buffer.

Of course, when offsetting PCR and/or PTS, PCR/PTS looping on the 33-bits base of the PCR/PTS should be taken into account.

**Figure 6** is an embodiment of the present principles illustrating the effect of adding positive offset to the timing references. Reference **601** represents a stream received by device **100.** Reference **61** represents a stream as for transmission to receiver **101-103.** The timing reference of the first I-frame **600** in stream **60** has a PCR value PCR0. As I-frames are repeated every second, the second I-frame **601** has a PCR value of PCR0 + 1 second, and the third I-frame **602** has a value of PCR0 + 2 seconds. The slow down sequence comprises one second of I-frame repeating, followed by two seconds of slow-down at a rate of 0.5. The total duration of the slow-down sequence **613** is thus 3 seconds, enabling a transmission buffer of 2s to be obtained. In reference **61**, after an initial delay of one second to receive the entire GoP starting with the first I-frame **600**, the first I-frame is repeated during one second (1s@0). At the start of this repetition, the time reference PCR in stream **61** is set to PCR0 (reference **610**)**.** PTSV (PTS Video) is set to the value of the PCR so that the decoder in the receiver **101-103** will decode the data immediately. Then, at the start of the time-stretched copy of the first GoP, PCR is set to PCR0+1s (reference **611**) as one second has passed. PTSV (PTS Video) is set to the value of the PCR. After two seconds, the second I-frame **601** is copied in stream **61.** PCR is now set to PCR0+3S (reference **612**) since 3 seconds have passed. PTSV (PTS Video) is set to the value of the PCR0+2s as the three second sequence represents two seconds of video (1s showing of a still, plus 2 seconds at a rate 0.5 = 1s; 1+1=2). A transmission buffer of 2s has thus been obtained. Comparing reference **601** to **612**, one observes that PCR offset is + 2s, PTSV offset = + 2s, and this offset should be added to each of the following PCRs/PTSs.

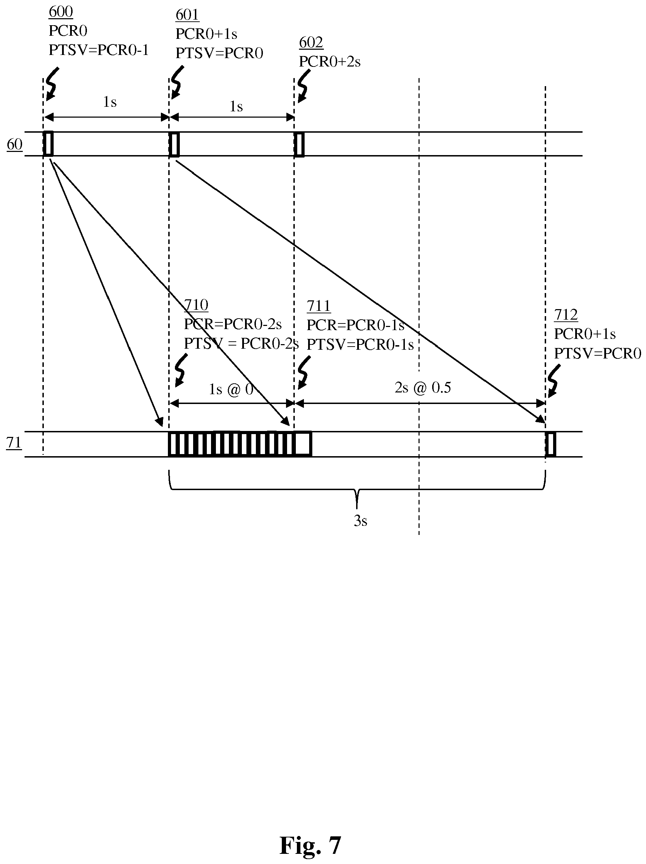

**Figure 7** is an embodiment of the present principles illustrating the effect of adding negative offset to the timing references. At the start of the repetition of the first I-frame **600** in stream **71**, the time reference PCR in stream **61** is set to PCR0-2s (reference **710**)**.** PTSV (PTS Video) is set to the value of the PCR so that the decoder in the receiver **101-103** will decode the data immediately. Then, at the start of the time-stretched copy of the first GoP, PCR is set to PCR0-1s (reference **711**) as one second has passed. PTSV (PTS Video) is set to the value of the PCR. After two seconds, the second I-frame **601** is copied in stream **71.** PCR is now set to PCR0+1 s (reference **712**) as three seconds have passed since PCR0. PTSV (PTS Video) is set to the value of the PCR0 as the equivalent of one second of video has passed since **711** (2s at a rate 0.5). A transmission buffer of 2s has thus been obtained. Comparing reference **601** to **712**, one observes that PCR and PTS in stream **71** are now equal to PCR/PTS in stream **60** and no more modifications of PCR and PTS are required for each of the following PCR/PTS. The negative offsetting of figure 7 thus has the advantage with regard to the positive offsetting of figure 6 that after the slow-down sequence, time references do not have to be changed anymore.

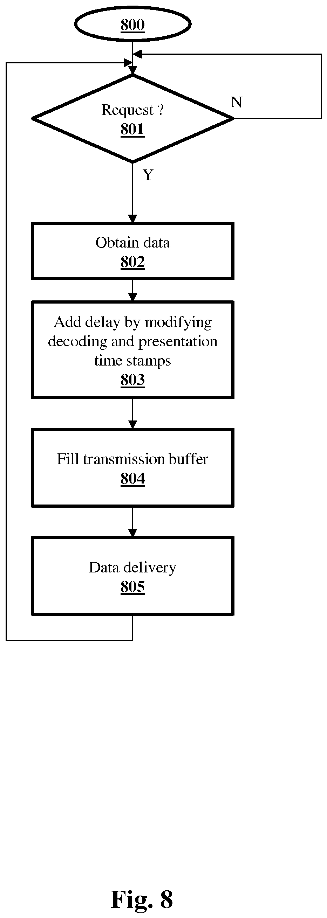

**Figure 8** is a flow chart **800** of an embodiment of the method of delivery of audiovisual content according to the present principles. The method is for example implemented by device **100.** In a first conditional step, a request for obtaining audiovisual data from a source for delivery to a receiver device (e.g., one of receiver devices **101-103**) is received (**801**-Yes). Such a request is for example, a request for audiovisual data from a new channel (channel change), from a source such as a terrestrial television frequency carrier, a satellite television carrier, a cable frequency carrier, or from a PVR **108.** If such a request is received, the audiovisual data is obtained from the source, for example, a first I-frame, or one or more complete GoPs, such as described with reference to the preceding drawings. In a step **803**, a delay is added between the obtaining of the audiovisual data from the source and delivery of the obtained audiovisual data to the receiver device. This is done by modifying decoding and presentation time stamps or time references in the audiovisual data, such as described with reference to the preceding drawings. The thus created delay (or 'lag') is used in a step **804** to fill the transmitter's transmission buffer as described with reference to the preceding drawings. Finally the data is delivered to the receiver, for example via the aforementioned (HLS) streaming mechanism.

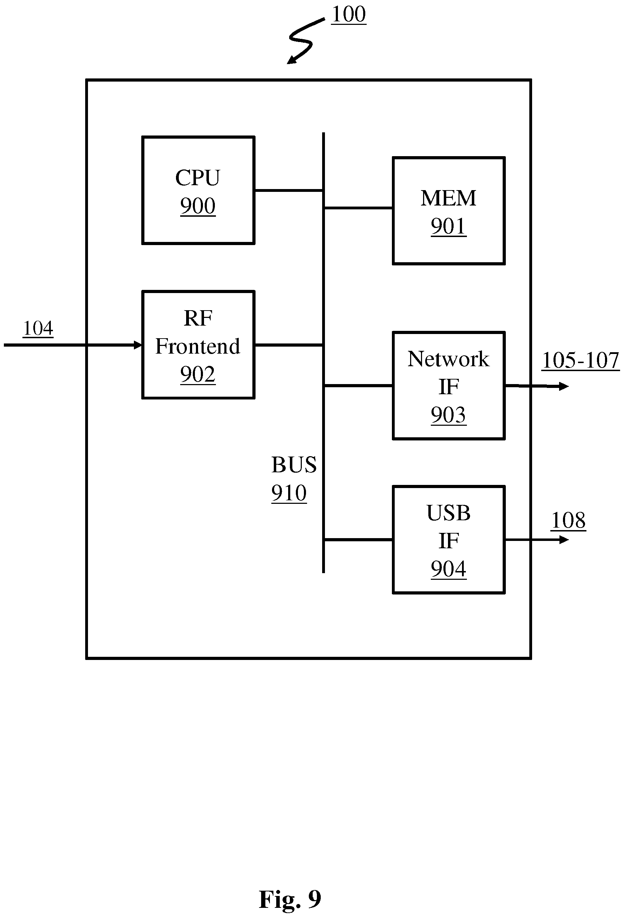

**Figure 9** is an embodiment of a device **100** for implementing the method of delivery of audiovisual content according to the present principles. The device is for example a Set Top Box or a (home) gateway. It includes a central processing unit or processor **900**, a memory **901**, a tuner or RF front end **902**, a network interface **903** and a USB interface **904**, interconnected via an internal communication bus **910.** The RF front end **902** receives audiovisual data from, for example, terrestrial, satellite or cable transmission. USB interface **904** is used for data communication with an external device, such as storage device **108.** Network interface **903** is used for data communication via a home network **110** with one or more receiver devices **101-103** via wired media **107** or wireless media **105-106.**

It is to be appreciated that some elements in the drawings may not be used or be necessary in all embodiments. Some operations may be executed in parallel. Variant embodiments other than those illustrated and/or described are possible. For example, a device implementing the present principles may include a mix of hard- and software.

It is to be appreciated that aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for delivery of audiovisual content to a receiver device (101-103), wherein the method is implemented by a transmitter device (100) and comprises:
receiving (801) a request for obtaining audiovisual data from a source for delivery to said receiver device;
obtaining (802) said audiovisual data from said source;
modifying decoding and presentation time references in said audiovisual data before delivery of said audiovisual data to said receiver device for slowed-down decoding of said audiovisual data by said receiver device, said slowed down decoding by said receiver device adding (803) a delay between the obtaining of the audiovisual data from said source and delivery of said obtained audiovisual data to said receiver device;
using (804) said added delay between said obtaining of said audiovisual data from said source and delivery of said obtained audiovisual data to said receiver device for filling a transmission buffer in said transmitter device with said obtained audiovisual data; and
delivery (805) of said audiovisual data to said receiver device.

2. The method according to claim 1, wherein said decoding and presentation time references are modified by applying an offset to said decoding and presentation time references, said offset slowing down decoding and presentation of said audiovisual data by said receiver device.

3. The method according to claim 1 or 2, further comprising stopping with adding said delay when said transmission buffer is full.

4. The method according any of claims 1 to 3, further comprising adding a further delay between the obtaining of the audiovisual data and delivery of the obtained audiovisual data to the receiver device by repeating independently decodable frames in said audiovisual data.

5. The method according to any of claims 1 to 4, wherein said audiovisual data source is one of:
a Digital Terrestrial Television frequency carrier;
a satellite frequency carrier;
a Cable frequency carrier;
an audiovisual data storage device.

6. The method according to any of claims 1 to 5, wherein said transmitter device is one of a gateway or a set top box.

7. A device (100) for delivery of audiovisual content to at least one receiver device (101-103), comprising a processor (900), a network interface (903) and a memory (901), said processor being configured to:
receive a request for obtaining audiovisual data from a source for delivery to said receiver device;
obtain said audiovisual data from said source;
modify decoding and presentation time references in said audiovisual data before delivery of said audiovisual data to said receiver device for slowed-down decoding of said audiovisual data by said receiver device, said slowed down decoding by said receiver device adding a delay between said obtaining of said audiovisual data from said source and delivery of said obtained audiovisual data to said receiver device;
use said added delay between said obtaining of said audiovisual data from said source and delivery of said obtained audiovisual data to said receiver device for filling a transmission buffer in said transmitter device with said obtained audiovisual data; and
deliver said audiovisual data to said receiver device.

8. The device according to claim 7, wherein said processor, said network interface and said memory are further configured to modify said decoding and said presentation time references by applying an offset to said decoding and presentation time references, said offset slowing down decoding and presentation of said audiovisual data by said receiver device.

9. The device according to claim 7 or 8, wherein said processor, said network interface and said memory are further configured to stop with adding said delay when said transmission buffer is full.

10. The device according any of claims 7 to 9, wherein said processor, said network interface and said memory are further configured to add a further delay between the obtaining of the audiovisual data and delivery of the obtained audiovisual data to the receiver device by repeating independently decodable frames in said audiovisual data.

11. The device according to any of claims 7 to 10, wherein said audiovisual data source is one of:
a Digital Terrestrial Television frequency carrier;
a satellite frequency carrier;
a Cable frequency carrier;
an audiovisual data storage device.

12. The device according to any of claims 7 to 11, wherein said transmitter device is one of a gateway or a set top box.
